Europäisches Patentamt

European Patent Office

Office européen des brevets

(11) Numéro de publication: **0 219 411**
**B1**

(12) ## FASCICULE DE BREVET EUROPEEN

(45) Date de publication du fascicule du brevet:
05.07.89

(51) Int. Cl.⁴: **B60N 1/02, H02K 7/10**

(21) Numéro de dépôt: 86402155.5

(22) Date de dépôt: 01.10.86

(54) Motoréducteur pour l'entraînement simultané de deux organes.

(30) Priorité: 01.10.85 FR 8514544

(43) Date de publication de la demande:
22.04.87 Bulletin 87/17

(45) Mention de la délivrance du brevet:
05.07.89 Bulletin 89/27

(84) Etats contractants désignés:
AT BE CH DE ES GB IT LI LU NL SE

(56) Documents cités:
CH-A- 259 574
DE-A- 1 755 740
DE-A- 3 235 622
DE-A- 3 444 420
FR-A- 1 539 452
US-A- 3 066 907

(73) Titulaire: **ECIA - EQUIPEMENTS ET COMPOSANTS POUR L'INDUSTRIE AUTOMOBILE,**
**F-25400 Audincourt(FR)**

(72) Inventeur: **Bianchi, François, 20 Combes Saint Germain,**
**F-25700 Valentigney(FR)**
Inventeur: **Duval, Alain, 10, rue de la Fontaine,**
**F-25350 Mandeure(FR)**
Inventeur: **Fourrey, François, 34, rue du Petit Chemin,**
**F-25200 Montbeliard(FR)**

(74) Mandataire: **Moncheny, Michel et al, c/o Cabinet**
**Lavoix 2 Place d'Estienne d'Orves, F-75441 Paris**
**Cedex 09(FR)**

ACTORUM AG

## Description

La présente invention concerne un motoréducteur tubulaire permettant l'entraînement simultané de deux organes, qui est tout particulièrement adapté à la commande des déplacements de l'une et l'autre des deux parties d'un siège d'automobile. Chacun de ces mouvements est en effet généralement commandé par deux dispositifs placés latéralement sous le siège, qui doivent être déplacés simultanément et exactement de la même manière, de sorte que la transmission entre le moteur et ces dispositifs est souvent complexe ou même encombrante. Or il est de plus en plus nécessaire de disposer, sous le siège du véhicule, d'une place libre pour accroître le confort des passagers.

Il est connu, par exemple, d'après le DE-A 1 755 740 d'entraîner deux dispositifs à partir d'un moteur unique placé sous le siège d'un véhicule et muni de deux arbres de sortie coaxiaux reliés chacun à un réducteur d'entraînement de l'un des dispositifs par l'intermédiaire l'un d'un élément flexible et l'autre d'un accouplement élastique. Un tel mode de transmission rend le montage délicat et ne permet pas une synchronisation parfaite des mouvements.

Il est par ailleurs connu, selon le DE-A 3 235 662, d'assembler l'un sur l'autre par encliquetage le carter d'un petit moteur électrique et un carter contenant un réducteur et portant les fiches d'alimentation électrique. Le moteur et le réducteur doivent donc être l'un contre l'autre tandis que l'alimentation électrique est effectuée par des conducteurs extérieurs.

La présente invention a pour but de fournir un motoréducteur qui permette l'entraînement simultané, précis, de deux organes espacés et soit facile à mettre en place et d'un encombrement extrêmement réduit.

Cette invention a en effet pour objet un motoréducteur pour l'entraînement simultané de deux organes comprenant un moteur électrique muni de deux arbres de sortie coaxiaux reliés chacun à un réducteur, caractérisé en ce qu'il comporte un boîtier tubulaire allongé qui délimite un logement pour le moteur électrique et pour ses deux arbres de sortie coaxiaux qui sont terminés par des filetages, ainsi qu'un conduit longitudinal de passage des conducteurs électriques d'alimentation; et, à chaque extrémité du boîtier, un réducteur dont le carter est prolongé par un embout cylindrique emboîté et encliqueté dans le boîtier.

Le motoréducteur ainsi réalisé forme un élément unitaire peu encombrant, qui a la longueur désirée, dont les différents constituants sont alignés avec précision et qui peut facilement être combiné dans un emplacement réduit avec d'autres motoréducteurs analogues commandant d'autres déplacements. Son montage est extrêmement simple puisque les réducteurs sont placés directement au droit des organes à entraîner.

Selon une autre caractéristique de l'invention, l'embout de chaque réducteur comporte une encoche de réception d'une saillie interne du boîtier et est enfilé axialement sur l'arbre de sortie correspondant.

Le montage du réducteur sur le boîtier est ainsi extrêmement simple et permet le remplacement du réducteur par un autre chaque fois que cela est nécessaire, c'est-à-dire l'adaptation du motoréducteur aux mouvements effectués, sans modification du circuit électrique.

Selon une autre caractéristique, le réducteur comporte un arbre intermédiaire solidaire d'une roue à vis en prise avec le filetage de l'arbre du moteur, et un arbre de sortie creux, de raccordement à l'organe à entraîner, un engrenage reliant les deux arbres de sortie et formé de pignons ayant un rapport de dents approprié relie l'arbre intermédiaire et l'arbre de sortie et cet engrenage peut être modifié sans que le mode de montage du carter ni son encombrement ne change.

Bien entendu les réducteurs placés aux deux extrémités du boîtier peuvent être identiques ou être différents, selon les utilisations.

La description ci-dessous de modes de réalisation donnés à titre d'exemples non limitatifs, et représentés aux dessins annexés, fera d'ailleurs ressortir les avantages et caractéristiques de l'invention.

Sur ces dessins:

la fig. 1 est une vue en coupe longitudinale d'un motoréducteur selon l'invention, le moteur et les arbres de sortie n'ayant pas été représentés en coupe pour simplifier le dessin;
la fig. 2 est une vue à plus grande échelle d'une variante du réducteur du motoréducteur de la figure 1;
la fig. 3 est une vue analogue à la figure 2 d'une autre variante du réducteur;
la fig. 4 est une vue partielle en coupe longitudinale prise suivant une direction sensiblement perpendiculaire à celle de la figure 1;
la fig. 5 est une vue partielle, analogue à la figure 4, de l'autre extrémité du motoréducteur;
la fig. 6 est une vue en coupe suivant la ligne 6-6 de la figure 5.

Le motoréducteur selon l'invention a une forme tubulaire et est enfermé à l'intérieur d'un boîtier allongé 1 dont la section est circulaire. A l'intérieur de ce boîtier est logé un moteur 2, de préférence un moteur électrique, qui est muni de deux arbres de sortie coaxiaux, respectivement 4 et 6. Ces arbres font saillie en sens inverse de part et d'autre du moteur 2 et sont munis chacun, à leur extrémité, d'un filetage 8, 10, les filets de ces filetages étant dirigés en sens inverse ou de même sens. Une cloison 12 longitudinale ménage, à l'intérieur ou à l'extérieur du boîtier 1, un conduit 14 qui s'étend sur presque toute la longueur du boîtier 1 et permet le passage des câbles ou autres conducteurs électriques 16 qui relient le moteur 2, à l'extérieur du boîtier, à une source de courant électrique (non représentée), par l'intermédiaire d'un connecteur électrique 17 solidaire du boîtier 1.

A chacune des extrémités du boîtier 1 est monté un réducteur 18, 20 qui comporte un carter 22 prolongé par un embout 24 qui est emboîté dans le boîtier 1. De préférence, chaque embout 25 comporte une encoche périphérique dans laquelle vient s'emboîter une saillie circulaire 26 du boîtier. En outre, l'embout 24 forme un épaulement 28 qui vient buter contre l'extrémité de ce boîtier.

L'embout 24 est par ailleurs percé d'un passage axial permettant son emboîtement sur l'arbre de sortie correspondant 4 ou 6 et le montage d'un palier 30 constitué soit par un roulement à billes, soit simplement par un coussinet, qui supporte cet arbre et permet sa rotation par rapport à l'embout 24.

Chacun des arbres se prolonge au-delà de l'embout 24 de sorte que son filetage 8 ou 10 entre en prise avec une roue à vis 32 portée par un arbre intermédiaire 34 monté rotatif dans le carter 22. Ce carter porte également un arbre de sortie 36 qui est solidaire d'une roue dentée 38 en prise avec une roue dentée 40 solidaire de l'arbre intermédiaire 34.

Le rapport entre les nombres de dents des roues dentées 38 et 40 est choisi de façon à assurer le rapport de réduction désiré.

L'arbre de sortie 36 est creux et fileté intérieurement de façon à permettre son raccordement à l'organe à entraîner.

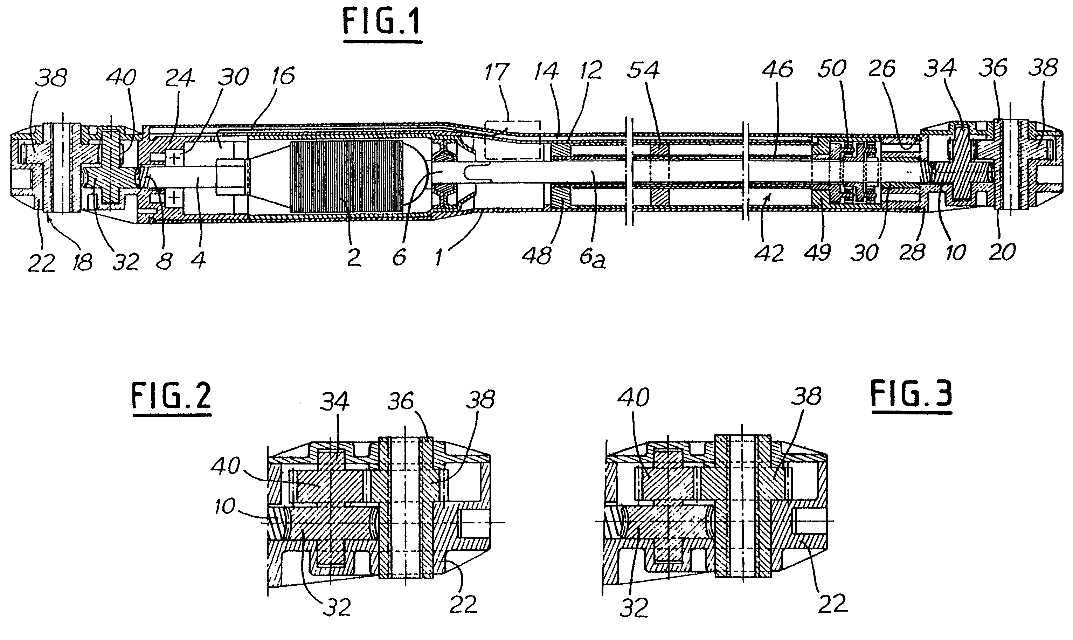

De préférence, comme représenté sur la figure 1, les réducteurs 18 et 20 sont semblables, de sorte que les deux organes entraînés par le moteur 2 effectuent simultanément des déplacements semblables. Toutefois ces réducteurs pourraient, si nécessaire, avoir des rapports de réduction différents, les roues dentées 38 et 40 ayant des diamètres et des nombres de dents différents de ceux représentés sur la figure 1. Par exemple, comme le montrent les figures 2 et 3, ces roues peuvent avoir soit des nombres de dents extrêmement voisins (fig. 2), soit des nombres de dents différents mais avec un rapport inférieur à celui de la figure 1 (fig. 3).

Dans tous les cas, les réducteurs 18, 20 peuvent facilement être retirés du boîtier 1 ou remis en place par encliquetage de l'embout 24 sur la saillie 26, de sorte que le réducteur le plus approprié peut à tout moment être monté sur le boîtier 1 pour assurer l'entraînement désiré.

De préférence, comme représenté, le boîtier 1 comporte une portion de moindre épaisseur entre le moteur 2 et l'un des réducteurs 20, et le moteur est placé au voisinage de l'une des extrémités de ce boîtier. En conséquence, l'un des arbres de sortie 4 est court tandis que l'arbre opposé 6 a une longueur relativement importante. Cet arbre 6 est alors, de préférence, réalisé en deux parties : l'arbre de sortie du moteur proprement dit et un arbre de transmission 6a qui est relié au premier par l'intermédiaire d'un accouplement à griffes ou un joint du type cardan, de façon à supprimer les risques de déplacement angulaire entre ces deux parties de l'arbre.

Le motoréducteur ainsi réalisé peut avoir toute longueur désirée, avec un diamètre et par suite un encombrement relativement faibles. Il peut donc facilement être utilisé pour entraîner deux organes éloignés,sans nécessiter de place importante et grâce à un montage simple.

Le boîtier 1 peut en outre contenir, autour de la portion 6a de l'arbre de sortie 6, une cassette 42 formée par un élément tubulaire dont la section épouse pratiquement la forme interne du boîtier 1, c'est-à-dire qui présente un renfoncement 44 au droit de la cloison 12 du conduit 14. Cette cassette est enfilée sur l'arbre 6a qui traverse une vise creuse 46 montée axialement dans la cassette et susceptible de tourner par rapport aux deux fonds 48 et 49 de cette cassette.

La vis 46 se prolonge d'ailleurs, à l'une de ses extrémités, au-delà du fond 49 pour être reliée, par l'intermédiaire d'un réducteur 50, à une roue dentée 52 solidaire de l'arbre de sortie 6a , à proximité du filetage 10 de ce dernier. Un baladeur 54 est par ailleurs monté à l'intérieur de la cassette 42 et fixé sur la vis 46. La forme de ce baladeur 54 se combine à celle de la cassette 42 pour interdire la rotation du baladeur par rapport à la vise et à la cassette. Par contre, le baladeur 54 est libre de se déplacer axialement sur la vis 46.

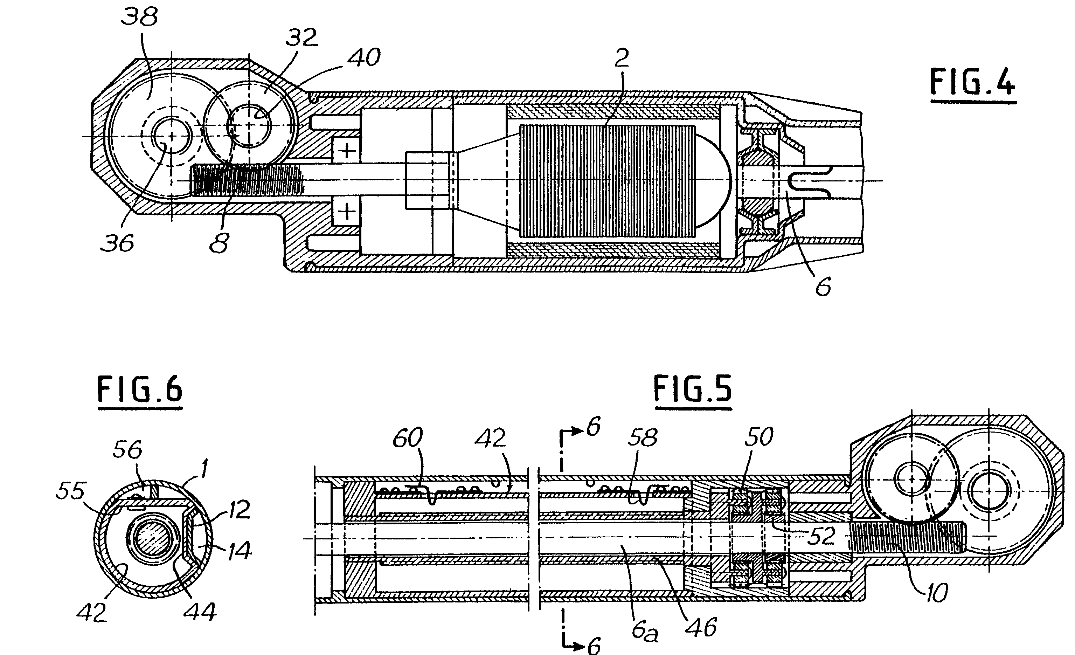

Comme le montre plus particulièrement la figure 6, la cassette 42 comporte une face plane 55 qui délimite, avec le boîtier 1, une chambre étroite 56 dans laquelle sont, par exemple, montés des capteurs de fin de course 58, 60 , et des capteurs de rotation non représentés.

Grâce à cette disposition, la rotation de l'arbre 6, 6a, en même temps qu'elle provoque le déplacement de l'organe à entraîner par l'intermédiaire du réducteur 20, provoque une rotation de la vis 46 c'est-à-dire un déplacement axial du baladeur 54. Selon le sens de la rotation de l'arbre 6a, le baladeur se rapproche de l'un ou l'autre des capteurs 58 ou 60. Lorsqu'il atteint ce capteur, ce dernier commande l'arrêt du moteur. Un réglage approprié de la position initiale du baladeur 54 ainsi que le choix du rapport de réduction du réducteur 50 permettent de provoquer ainsi l'arrêt du moteur 2 avant tout contact brutal de l'organe à entraîner avec sa position extrême, ce qui limite les risques de détérioration de l'ensemble et augmente la longévité du système.

Bien entendu, la cassette 42 pourrait également contenir un dispositif de mémorisation ou tout autre système analogue facilitant la précision de la commande du déplacement.

On obtient ainsi un motoréducteur dont le fonctionnement peut être précis et automatique bien que son montage et sa réalisation soient simples et qui présente un encombrement particulièrement faible.

Ce motoréducteur permet d'entraîner simultanément deux organes effectuant des mouvements identiques, ou même des mouvements différents, et s'adapte facilement à des dispositifs divers. En effet, la forme cylindrique de l'embout 24 ainsi que la transmission par vis et roue à vis permettent de donner au réducteur toute position désirée autour de l'arbre de sortie 4, 6, c'est-à-dire toute orientation désirée à l'arbre creux 36.

**Revendications**

1 - Motoréducteur pour l'entraînement simultané de deux organes comprenant un moteur électrique (2) muni de deux arbres de sortie coaxiaux (4, 6) reliés chacun à un réducteur (18, 20), caractérisé en ce qu'il comporte un boîtier tubulaire allongé (1) qui délimite un logement pour le moteur électrique (2) et pour ses deux arbres de sortie coaxiaux (4, 6) qui sont terminés par des filetages (8, 10), ainsi qu'un conduit longitudinal (14) de passage des conducteurs électriques d'alimentation; et, à chaque extrémité du boîtier, le réducteur (18, 20) dont le carter (22) est prolongé par un embout cylindrique (24) emboîté et encliqueté dans le boîtier.

2 - Motoréducteur suivant la revendication 1, caractérisé en ce que l'embout cylindrique (24) du réducteur comporte une encoche périphérique de réception d'une saillie (26) interne du boîtier, et un passage central traversé par l'arbre de sortie (4, 6) du moteur.

3 - Motoréducteur suivant l'une des revendications 1 et 2, caractérisé en ce que le réducteur (18, 20) comporte une roue à vis (32) en prise avec le filetage (8,10) correspondant, et un arbre d'entraînement creux (36) de raccordement à l'organe à entraîner.

4 - Motoréducteur suivant l'une des revendications précédentes, caractérisé en ce que le moteur (2) est placé à proximité d'une extrémité du boîtier et entraîne un arbre de sortie de grande longueur (6) réalisé en deux parties reliées entre elles par un accouplement à griffes.

5 - Motoréducteur suivant l'une des revendications précédentes, caractérisé en ce qu'il comporte à l'intérieur du boîtier, autour de l'un des arbres de sortie, une cassette (42) portant des capteurs de fin de course (58,60) et de rotation et un baladeur (54) entraîné à partir de l'arbre de sortie correspondant.

6 - Motoréducteur suivant la revendication 5, caractérisé en ce que la cassette (42) porte une vis creuse reliée à l'arbre de sortie (6) par l'intérmediaire d'un réducteur (50),sur laquelle le baladeur (54) se déplace axialement.

7 - Motoréducteur suivant l'une des revendications 5 et 6, caractérisé en ce que la cassette (42) comporte une face plane (55) qui délimite avec le boîtier (1) une chambre (56) de passage du circuit électrique des capteurs et de liaison de ceux-ci au moteur.

## Patentansprüche

1. Getriebemotor für den gleichzeitigen Antrieb zweier Organe mit einem elektrischen Motor (2), der mit zwei koaxialen Ausgangswellen (4, 6) versehen ist, die jede mit einem Untersetzungsgetriebe (18, 20) verbunden sind, dadurch gekennzeichnet, daß er ein längliches rohrförmiges Gehäuse (1) aufweist, das eine Aufnahme für den elektrischen Motor (2) und für seine koaxialen Ausgangswellen (4, 6), die durch Gewindespindeln (8, 10) beendet sind, sowie eine Längsleitung (14) für den Hindurchtritt der elektrischen Zuführleitungen begrenzt; und an jedem Ende des Gehäuses das Untersetzungsgetriebe (18, 20) aufweist, dessen Gehäuse (22) durch ein zylindrisches Endstück (24) verlängert ist, das in das Gehäuse eingesetzt und eingerastet ist.

2. Getriebemotor nach Anspruch 1, dadurch gekennzeichnet, daß das zylindrische Endstück (24) des Untersetzungsgetriebes eine Umfangsaufnahmekerbe eines inneren Vorsprungs (26) des Gehäuses und eine zentrale Durchtrittsöffnung aufweist, die von der Ausgangswelle (4, 6) des Motors durchquert wird.

3. Getriebemotor nach einem der Ansprüche 1 oder 2, dadurch gekennzeichnet, daß das Untersetzungsgetriebe (18, 20) ein Schneckenrad (32) in Eingriff mit der zugehörigen Schraubenspindel (8, 10) und eine hohle Antriebswelle (36) aufweist, zur Verbindung mit dem anzutreibenden Organ.

4. Getriebemotor nach einem der vorhergehenden Ansprüche, dadurch gekennzeichnet, daß der Motor (2) in der Nähe eines Endes des Gehäuses (1) angeordnet ist und eine Ausgangswelle von großer Länge (6) antreibt, die aus zwei Bereichen gebildet ist, die untereinander durch eine Klauenkupplung verbunden sind.

5. Getriebemotor nach einem der vorhergehenden Ansprüche, dadurch gekennzeichnet, daß er im Inneren des Gehäuses um eine der Ausgangswellen herum eine Kassette (42), die Fühler bzw. Aufnehmer für das Streckenende (58, 60) und für die Drehung und ein Schubglied (54) aufweist, das ausgehend von der zugehörigen Ausgangswelle angetrieben ist.

6. Getriebemotor nach Anspruch 5, dadurch gekennzeichnet, daß die Kassette (42) eine hohle Schraube (46) aufweist, die mit der Ausgangswelle (6) mittels eines Untersetzungsgetriebes (50) verbunden ist, auf dem sich das Schubglied (54) axial bewegt.

7. Getriebemotor nach einem der Ansprüche 5 oder 6, dadurch gekennzeichnet, daß die Kassette (42) eine ebene Seite (55) aufweist, die mit dem Gehäuse (1) eine Kammer (56) für den Durchtritt des elektrischen Schaltkreises der Fühler und für die Verbindung dieser zu dem Motor begrenzt.

## Claims

1. Motor-speed reducer for simultaneously driving two members comprising an electric motor (2), equipped with two coaxial output shafts (4, 6), each connected to a reducer (18, 20), characterized in that it comprises an elongated tubular case (1) defining a cavity for the electric motor (2) an for its two coaxial output shafts (4, 6), which are terminated by worms (8, 10), as well as a longitudinal conduit (14) for the passage of electric supply conductors, with, at each end of the case, the reducer (18, 20), whose housing (22) is extended by a cylindrical end fitting (24) fitted and ratched in the case.

2. Motor-speed reducer according to claim 1, characterized in that the cylindrical end portion (24) of the speed reducer comprises a peripheral recess for receiving an internal projection (26) of the case, and a central passage through which the output shaft (4, 6) of the motor extends.

3. Motor-speed reducer according to claim 1 or 2, characterized in that the speed reducer (18, 20) comprises a worm wheel (32) engaged with the corresponding worm (8, 10) and a hollow driving shaft (36) for connection to the structure to be driven.

4. Motor-speed reducer according to any one of the preceding claims, characterized in that the motor (2) is located in the vicinity of one end of the case (1) and drives an output shaft (6) of great length constructed in two parts which are interconnected by a claw coupling.

5. Motor-speed reducer according to any one of the preceding claims, characterized in that it comprises, inside the case, around one of the output shafts, a cassette (42) carrying end-of-travel and rotation detectors (58, 60) and a movable gear (54) driven by the corresponding output shaft.

6. Motor-speed reducer according to claim 5, characterized in that the cassette (42) carries a hollow worm (46) connected to the output shaft (6) through a speed reducer (50) on which the movable gear (54) moves axially.

7. Motor-speed reducer according to claim 5 or 6, characterized in that the cassette (42) comprises a planar face (56) which defines with the case (1) a chamber (56) for the passage of an electric circuit of the detectors and for the connection of the detectors to the motor.

FIG.1

FIG.2

FIG.3

**FIG.4**

**FIG.6**

**FIG.5**

EP 0 219 411 B1